# EUROPÄISCHE PATENTSCHRIFT

(11) **EP 0 343 097 B1**
(45) Veröffentlichungstag und Bekanntmachung des Hinweises auf die Patenterteilung: **23.03.1994**
(21) Anmeldenummer: 89730105.7
(22) Anmeldetag: 17.04.1989
(51) Int. Cl.: B65G 47/26, B65G 47/29

(54) **Staurollenbahn**
Roller accumulation conveyor
Convoyeur accumulateur à rouleaux

(30) Priorität: 19.05.1988 DE 3817388
(43) Veröffentlichungstag der Anmeldung: 23.11.1989
(73) Patentinhaber: MANNESMANN Aktiengesellschaft, 40027 Düsseldorf (DE)
(72) Erfinder: Bonifer, Edgar, D-6115 Münster (DE); Kratz, Helmut, D-6054 Rodgau 2 (DE); Duttiné, Walter, D-6050 Offenbach/M. (DE); Jahns, Werner, Dipl.-Ing., D-6453 Seligenstadt (DE)
(74) Vertreter: Meissner, Peter E., Dipl.-Ing.

(56) Entgegenhaltungen:
- EP-A- 0 223 441
- AT-B- 282 473
- DE-C- 3 522 177

## Beschreibung

Die Erfindung betrifft eine Staurollenbahn nach den Merkmalen des Oberbegriffes des Hauptanspruches.

Aus der EP-A-223 441 ist es bekannt, die Schaltleiste der betreffenden Staurollenbahn als zweiarmigen Hebel auszubilden, dessen unterhalb der Tragrollen gelegener Hebelarm ein Schaltelement betätigt, über das letztlich ein Schaltlineal gesteuert wird.

Bei der dort beschriebenen Konstruktion ist jedoch eine Abbremsung jeder Tragrolle nur schwierig zu realisieren. Die Anordnung von Bremshebeln zwischen den Tragrollen führt zu dem Nachteil, daß keine enge Teilung der Tragrollen ausführbar ist; insgesamt läßt sich eine raumsparende Bauweise nicht erreichen.

Vergleichbare Nachteile weist auch der Sammelförderer nach AT-B-282 473 auf, bei dem die Bewegungssteuerung pneumatisch erfolgt, wobei eine Druckluftquelle mit dem Betätiger verbunden und ein im Normalfall offenes, von einer Abtastvorrichtung bei Batätigung derselben durch einen Fördergegenstand schließbares Ventil zwischen der Druckluftquelle und dem Batätiger angeordnet ist, und weiters eine, eine bestimmte Zeitverzögerung zwischen dem Schließen des Ventils und dem hiervon abhängigen Verschieben des Antriebsgliedes durch die vom Betätiger verursachte Verschwenkung der Verschiebeeinrichtung erzeugende Entlüftungsvorrichtung vorgesehen ist.

Bei einer Staurollenbahn nach der DE-C-35 22 177 werden die Schaltlineale in umständlicher Weise entgegen der Kraft von Federn verschoben und die Schaltrollen werden, nachdem sie von einer Feder angetippt wurden, vom Antriebsgurt verdreht. Diese Art ist aufwendig und wegen des schwierigen Zusammenspiels mit der Feder zum Bewegen des Schaltlineals unzuverlässig.

Aufgabe der Erfindung ist es daher, eine Staurollenbahn der vorgenannten Art zu vereinfachen und funktionssicherer zu gestalten. Diese Aufgabe wird dadurch gelöst, daß die Schaltleiste eines jeden Stauplatzes als zweiarmiger Hebel ausgebildet ist und mit dem unteren Ende ein Schaltelement betätigt, das über eine Logikschaltung ein Stellgerät für das Schaltlineal steuert, das ein Bolzengelenk für einen Hebel der mit dem exzentrischen Lagerring und dem Exzentertragring versehenen Schaltrolle hat. Schaltelemente und Logiksteuerungen für Stellgeräte sind jetzt preiswerte und bewährte Bauelemente.

Vorzugsweise beträgt der Winkel zwischen dem Hebel der Schaltrolle und deren exzentrischen Lagerring für die Gurtrolle ca. 135 Grad und der Exzentertragring für die Bremsrolle steht gegenüberliegend vor, so daß bei einem ausreichend großen Hub des Schaltlineals und entsprechendem Verdrehen der Schaltrolle durch deren Hebel entweder die Gurtrolle den Antriebsgurt antreibend oder die Bremsrolle den Bremsgurt bremsend gegen die Tragrollen drückt. Das Schaltelement und die Stellgeräte können Druckmittel- oder Elektrogeräte sein, wobei die Stellgeräte einen vorgegebenen Hub haben können. Alle diese genannten Elemente einer Staurollenbahn sind über Steuerleitungen mit einer Logikschaltung verbunden.

Ein Ausführungsbeispiel der Erfindung ist in den Zeichnungen dergestellt und im folgenden erläutert. Es zeigen:
- Fig. 1 bis 4: Ausschnitte eins einer Rollenförderbahn in verschiedenen Staupositionen,
- Fig. 5: Detail A aus Figur 2 in größerem Maßstab,
- Fig. 6: Detail B aus Figur 3 in größerem Maßstab,
- Fig. 7: den Schnitt VII-VII durch die Figur 5,
- Fig. 8: den Schnitt VIII-VIII durch die Figur 1 in größerem Maßstab.

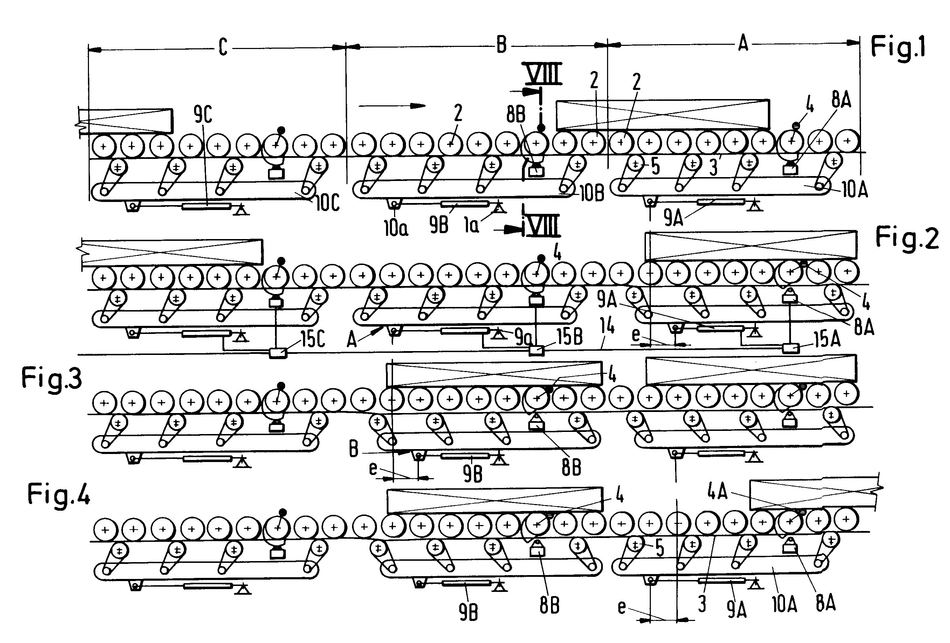

Bei der Lege nach Figur 1 regen alle Schaltleisten 4 über die zwischen Seitenwangen 1 gelagerten Tragrollen 2 hinaus, die auf den Stauplätzen A, B und C von dem Antriebsgurt 3 angetrieben werden. Dieser wird von den Gurtrollen 5 in gehobener Stellung an den Tragrollen 2 entlang geführt. Der Stauplatz A ist der vorderste Stauplatz der Förderbahn und sein Schaltlineal 10A wurde von einem nicht gezeichneten externen Schaltelement in Form eines Ventils oder Endschalters in Vorbereitungsstellung gebracht, d. h., das externe Schaltelement hat in einer pneumatischen oder elektrischen Logikschaltung die Voraussetzung für den zu erfolgenden Stauvorgang geschaffen. Diese Voraussetzung kann auch dadurch zustandekommen, daß an einem dem Stauplatz A vorgelagerten Stauplatz eine Schaltleiste 4 von einem Fördergut verschwenkt wurde. Die Schaltleiste ist als zweiarmiger Hebel ausgebildet und betätigt mit dem unteren Hebelende 4a ein Schaltelement 8. Dieses ist auch über Steuerleitungen 14 an die Logikschaltung 15 nach Figur 2 angeschlossen und bewirkt über ein Stellgerät 9 das Verschieben des Schaltlineals 10 über sein Lagerauge 10a in oder entgegen der Förderrichtung.

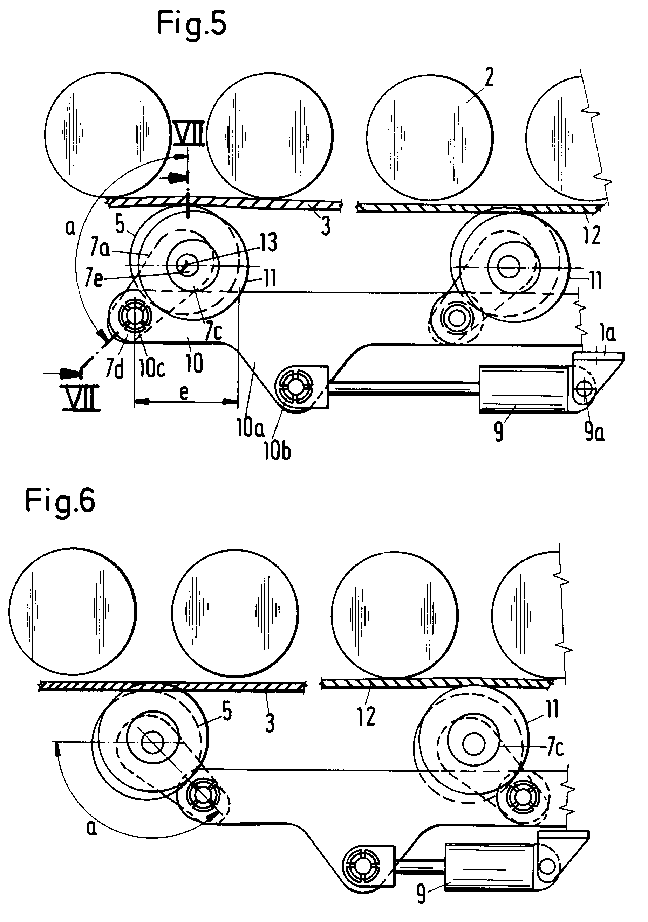

Bei der Schaltsituation nach Figur 2 hat ein Fördergut die Schaltleiste 4 am Stauplatz A heruntergedrückt und damit das Schaltelement 8A geschaltet, wodurch über die Logikschaltung 15 das Steuergerät 9A betätigt wird und einen Hub von ca. 40 mm verrichtet, so daß die Schaltrollen 7 über ihre Hebel 7a um ca. 90 Grad gedreht werden, wie beim Vergleich der Figuren 5 und 6 zu erkennen ist.

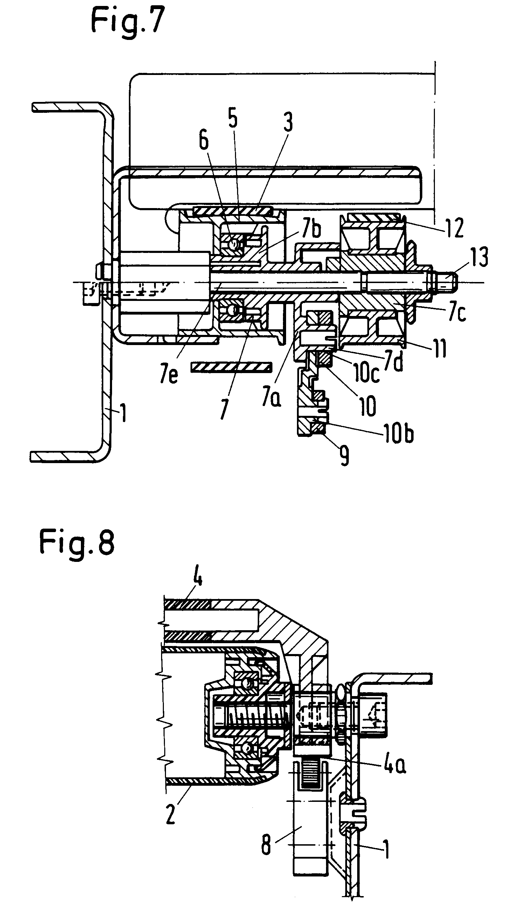

Bei der Stellung nach den Figuren 5 und 7 sind die Gurtrollen 5 angehoben und der Antriebsgurt 3 liegt von unten an den Tragrollen 2 an. Figur 7 zeigt die Seitenwange 1 mit einer Exzentertragachse 13 für die Schaltrolle 7. Diese hat in der Stellung nach Figur 7 auf dem der Seitenwange 1 zugewandten Ende einen nach oben gerichteten exzentrischen Lagerring 7b für ein Lager 6 der Gurtrolle 5 und auf dem anderen Ende einen vorwiegend nach unten gerichteten Exzentertragring 7c für eine Bremsrolle 11, auf der der Bremsgurt 12 liegt. Da sich die Bremsrolle 11 nur geringfügig gegenüber dem Exzentertragring 7c verdreht, ist kein besonderes Lager für die Bremsrole 11 erforderlich. Aus fertigungstechnischen Gründen ist die Schaltrolle im Bereich des Exzentertragringes 7c aus einem anderen Teil hergestellt als der Bereich des exzentrischen Lagerringes 7b, der mit einem Hebel 7a versehen ist. Dieser ragt mit einem Zapfen 7d durch eine Bohrung 10c des Schaltlineals 10. Dieses hat ein nach unten vorstehendes Lagerauge 10a mit einem Bolzengelenk 10b für den Angriff des Stellgerätes 9, das über eine Achse 9a pendelnd an einer Konsole 1a der Seitenwange 1 befestigt ist.

Wenn ein Fördergut die einer Tragrolle 2 zugeordnete Schaltleiste 4 eines Stauplatzes verschwenkt, betätigt der in Figur 8 erkennbare, nach unten gerichtete Hebel 4a der Schaltleiste 4 ein an der Seitenwange 1 angeordnetes Schaltelement 8. Dieses bewirkt über die Logikschaltung 15 einen Hub e des Stellgerätes 9, das die Schaltleiste 10 in die Stellung nach Figur 6 verschwenkt. Dabei wird die Schaltrolle 7 von dem Hebel 7a um ca. 90 Grad verdreht und die Bremsrolle 11 über den Exzentertragring 7c gehoben, während der exzentrische Lagerring 7b für die Gurtrolle 5 um den Winkel a gesenkt wird, wie in Fig. 6 gezeichnet. Der Antriebsgurt 3 liegt nicht mehr an den Tragrollen 2 an, die dann von dem in axialer Richtung festliegenden Bremsgurt 12 sofort gebremst werden.

Bei der Situation nach Figur 3 hat das Fördergut die Schaltleiste 4 des Stauplatzes B betätigt und den Antriebsgurt 3 durch Absenken der Gurtrollen 5 von den Tragrollen 2 gelöst. Das Schaltlineal 10B hat einen Hub e ausgeführt. Die Schaltleiste 4 hat des weiteren über das Schaltelement 8B in der Logikschaltung 15B die Voraussetzung für einen möglichen Stauvorgang am Stauplatz C geschaffen.

Bei der Situation nach Figur 4 wurde die Stausituation des Stauplatzes A aufgehoben. Das Schaltlineal 10A wurde durch einen Impuls an einem externen Schaltelement über die Logikschaltung und dem Schaltgerät 9A um den Einschalthub e verschoben.

Verläßt die Hinterkante des Fördergutes die Schaltleiste 4 am Stauplatz A, so wird das Schaltelement 8A und über die Logikschaltung das Stellgerät 9B betätigt. Somit wird das Schaltlineal 10B um den Einschalthub verschoben, wobei die in den Schaltrollen 7 exzentrisch gelagerten Gurtrollen 5 angehoben werden und den Antriebsgurt 3 gegen die Tragrollen 2 drücken, die das darauf befindliche Fördergut weiterbefördern. Wenn die Hinterkante des Fördergutes die Schaltleiste 4 am Stauplatz B verlassen hat, wird das Schaltelement 8B betätigt und beendet über die Logikschaltung 15 die Vorbereitungsstellung im Stauplatz C.

## Patentansprüche

1. Staurollenbahn mit Tragrollen (2) und in den Förderweg hineinbewegbaren Schaltleisten (4) zum Lösen eines über heb- und senkbare Gurtrollen (5) geführten Antriebsgurtes (3) von den Tragrollen (2), wobei jede Gurtrolle (5) auf einem exzentrischen Lagerring (7b) einer auf einer Exzentertragachse (13) gelagerten Schaltrolle (7) gelagert ist, die neben dem exzentrischen Lagerring (7b) einen zur gegenüberliegenden Seite gerichteten Exzentertragring (7c) für eine Bremsrolle (11) hat, die in gehobener Stellung einen in Förderrichtung festliegenden Bremsgurt (12) von unten gegen die Tragrollen (2) drückt, wobei alle Schaltrollen (7) eines Stauplatzes von einem axial verschiebbaren Schaltlineal (10) gesteuert werden,
**dadurch gekennzeichnet**, daß die Schaltleiste (4) als zweiarmiger Hebel (4a) ausgebildet ist und mit dem unteren Ende ein Schaltelement (8) betätigt, das über eine Logikschaltung (15) ein Stellgerät (9) für das Schaltlineal (10) steuert, das Bolzengelenke (10c) für einen Hebel (7a) hat, der mit der Schaltrolle (7) verbunden ist.

2. Staurollenbahn nach Anspruch 1,
**dadurch gekennzeichnet**, daß das Stellgerät (9) um eine waagerechte Achse (9a) pendelnd an einer Konsole (1a) einer Seitenwange (1) der Staurollenbahn gelagert ist.

3. Staurollenbahn nach Anspruch 2,
**dadurch gekennzeichnet**, daß das Stellgerät (9) ein Druckmittelgerät ist.

4. Staurollenbahn nach Anspruch 2,
**dadurch gekennzeichnet,** daß das Stellgerät (9) ein Elektrogerät ist.

5. Staurollenbahn nach einem der Ansprüche 3 oder 4,
**dadurch gekennzeichnet,** daß das Stellgerät (9) einen vorgegebenen Hub hat.

6. Staurollenbahn nach einem oder mehreren der vorgenannten Ansprüche **dadurch gekennzeichnet,** daß alle Schaltelemente (8) und Stellgeräte (9) einer Staurollenbahn über Steuerleitungen (14) mit einer Logikschaltung (15) verbunden sind.

## Claims

1. Roller accumulation conveyor with supporting rollers (2) and shift rods (4) which can be moved into the conveying path to separate a drive belt (3), which is guided by raisable and lowerable belt rollers (5), from the supporting rollers (2), each belt roller (5) being mounted on an eccentric bearing ring (7b) of a shift roller (7) which is mounted on an eccentric supporting shaft (13) and comprises, in addition to the eccentric bearing ring (7b), an eccentric supporting ring (7c), which points towards the opposite side, for a braking roller (11) which, when in the raised position, presses a brake belt (12), which is fixed in the conveying direction, against the supporting rollers (2) from below, and all the shift rollers (7) of an accumulation location being controlled by an axially displaceable linear shift member (10), characterised in that the shift rod (4) is formed as a two-armed lever (4a) and actuates by way of its lower end a switching element (8) which controls an actuating appliance (9) for the linear shift member (10) via a logic circuit (15), which member comprises pin joints (10c) for a lever (7a) which is connected to the shift roller (7).

2. Roller accumulation conveyor according to claim 1, characterised in that the actuating appliance (9) is mounted in pendulum fashion about a horizontal axis (9a) at a bracket (1a) of a side wall (1) of the roller accumulation conveyor.

3. Roller accumulation conveyor according to claim 2, characterised in that the actuating appliance (9) is a pressure-medium appliance.

4. Roller accumulation conveyor according to claim 2, characterised in that the actuating appliance (9) is an electrical appliance.

5. Roller accumulation conveyor according to either claim 3 or 4, characterised in that the actuating appliance (9) has a predetermined stroke.

6. Roller accumulation conveyor according to one or more of the preceding claims, characterised in that all the switching elements (8) and the actuating appliances (9) of a roller accumulation conveyor are connected via control lines (14) to a logic circuit (15).

## Revendications

1. Transporteur accumulateur à rouleaux, comportant des rouleaux porteurs (2) et des barres de commutation (4) pouvant être introduites dans le chemin d'avance, pour soulever une bande d'entraînement (3) guidée par l'intermédiaire de rouleaux (5) pouvant être relevés ou rabaissés, des rouleaux porteurs (2), chaque rouleau (5) étant monté sur un anneau de palier excentrique (7b) d'un rouleau de commutation (7), monté sur un axe porteur excentrique (13) et comportant, en plus de l'anneau de palier excentrique (7b), un anneau porteur excentrique (7c) dirigé vers la face opposée, pour un rouleau de freinage (11) qui pousse, en position relevée, une bande de freinage (12) fixée en direction d'avance, d'en bas, contre les rouleaux porteurs (2), tous les rouleaux de commutation (7) d'un emplacement de retenue étant commandés par un guide de commutation (10) pouvant être déplacé axialement,
caractérisé en ce que la barre de commutation (4) est réalisée sous forme d'un levier (4a) à deux bras et actionne, par l'extrémité inférieure, un élément de commutation (8) qui commande, par l'intermédiaire d'un circuit logique (15), un appareil de positionnement (9) du guide de commutation (10) qui comporte des articulations à tourillon (10c) pour un levier (7a) relié au rouleau de commutation (7).

2. Transporteur accumulateur à rouleaux selon la revendication 1,
caractérisé en ce que l'appareil de positionnement (9) est monté sur une console (1a) d'une paroi latérale (1) du transporteur accumulateur à rouleaux, de façon à osciller autour d'un axe horizontal (9a).

3. Transporteur accumulateur à rouleaux selon la revendication 2,
caractérisé en ce que l'appareil de positionnement (9) est un appareil à fluide sous pression.

4. Transporteur accumulateur à rouleaux selon la revendication 2,
caractérisé en ce que l'appareil de positionnement (9) est un appareil électrique.

5. Transporteur accumulateur à rouleaux selon l'une des revendications 3 ou 4,
caractérisé en ce que l'appareil de positionnement (9) présente une course prédéfinie.

6. Transporteur accumulateur à rouleaux selon l'une ou plusieurs des revendications précédentes,
caractérisé en ce que tous les éléments de commutation (8) et tous les appareils de positionnement (9) d'un transporteur accumulateur à rouleaux sont reliés à un circuit logique (15), par l'intermédiaire de liaisons de commande (14).
